# EUROPEAN PATENT APPLICATION

(11) **EP 1 153 708 A1**
(43) Date of publication of application: **14.11.2001**
(21) Application number: 01304061.3
(22) Date of filing: 03.05.2001
(51) Int. Cl.: B23Q 11/10

(54) **High speed milling**

(30) Priority: 11.05.2000 GB 0011315
(71) Applicant: ROLLS-ROYCE plc, London, SW1E 6AT (GB)
(72) Inventor: Church, Richard, Knowle, Bristol BS14 9ED (GB); Hill, Chritopher Peter Ralph, Thornbury, Bristol BS35 1HX (GB); Watkins, James Rodney, Stoke Bishop, Bristol BS34 6BS (GB)
(74) Representative: Bird, Vivian John

(57) **Abstract**

A method of high speed milling, and apparatus for performing the method, comprises directing a jet of high pressure coolant at the cutting zone of a rotary cutting tool. The jet of coolant has a delivery pressure of up to 500 bar at a flow rate of up to 60 litres per minute. The method is especially effective when used with a rotary cutting tool having at least 20 cutting edges and up to 100 cutting edges.

## Description

The invention relates to a method and apparatus for high speed milling.

A method for the controlled removal of chips in boring mills is described in European Patent Application No 0,624,429. According to this method,and in the boring mill apparatus constructed in accordance with the principles of the method, one or more jets of fluid at high pressure is directed at the location where chips tend to accumulate. The cutting fluid is drawn from a reservoir by a pump capable of operating at 130-200 bar with a flow rate or the order of approximately 30 litres per minute, and is directed at the chips emerging from the cutting to promote their natural removal. The purpose of the jets is to cause the chips to break off quickly and to clear away the hcips instead of allowing them to accumulate in the region of the cutting.

The boring mill described is arranged vertically with the cutting tool and fluid jets suspended below an overhead portion of the machine with the workpiece mounted below. The chips naturallly tend to fall downwards when broken-off by the jets because of their weight. The cutting tool and the fluid nozzles are held stationery relative to the fixed part of the boring mill while the workpiece is rotated about the vertical axis to generate the cutting movement. This kind of arrangement issuitable for boring cylindrical surfaces and at relatively low shock removal rates with single point cutting tools, but does not lend itself to use with high speed rotary cutting tools of the type used in conjunction with multi-axis machining centres.

According to one aspect the invention concerns improvements to a milling operation employing a milling cutter of the kind described in our co-pending application entitled "Multi-Fluted Milling Cutter", GB Patent Application No 0011215.1 (priority application). According to another aspect of the invention the improvements concern modifications to apparatus for performing the milling operation.

According to the present invention in its broadest aspect a method of high speed milling a method of high speed milling using a rotary cutting tool including the step of directing towards the cutting zone of the rotary cutting tool a jet of high pressure coolant delivered at a pressure of at least 5 Bar and up to about 500 Bar.

Also according to the invention there is provided apparatus for carrying out the method of high speed milling as claimed in any preceding claim comprising a spindle for mounting a rotary cutting tool, at least one nozzle for directing towards the cutting zone of the rotary cutting tool a jet of high pressure coolant, a source of high pressure coolant connected with said nozzle to deliver a jet of high pressure coolant of at least 5 Bar and up to about 500 Bar.

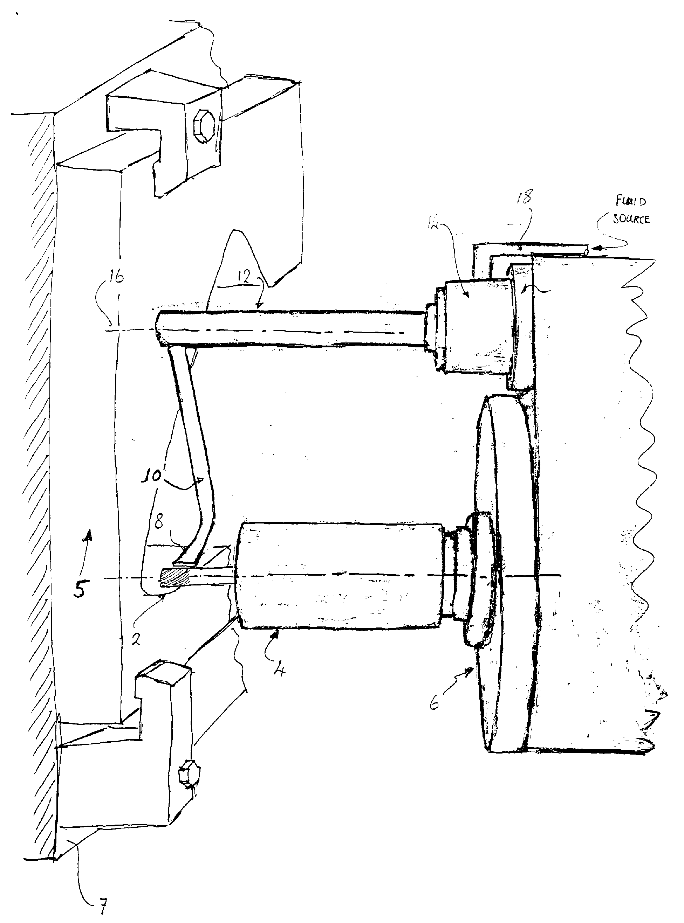

The invention and how it may be carried into practice will now be described in more detail with reference to an arrangement illustrated in the accompanying drawing.

The illustration of a high speed milling arrangement shows a rotary cutting tool in the form of a multi-fluted milling cutter 2, which may be of the kind referred to above, carried in a tool holder 4 mounted on the rotating spindle 6 of a multi-axis machining centre. The spindle axis of the machine may be horizontal as illustrated in the drawing. The workpiece to be milled is shown at 5 mounted on a multi-axis worktable, shown at 7, of a conventional kind.

A coolant nozzle 8 is aimed at the cutting zone of the milling cutter 2. Coolant is supplied to nozzle 8 from a fluid source (not shown) through supply ducting comprising pipes 10,12. Supply pipe 12 is rotatably mounted in a swivel coupling 14 which allows pipe 12 to be rotated about its longitudinal axis 16. By swivelling the pipe 12 about its axis the pipe 10 and nozzle 8 may be swung away from the vicinity of the milling cutter 8 thereby providing sufficient clearance for an automatic tool change mechanism to operate to remove and replace the mill 2 and tool holder 4. The swivel coupling 14 is arranged to receive a supply of liquid coolant through a further static pipe 18 connected to source of high pressure coolant (not shown). The coupling 14 is arranged internally to convey the supply of coolant from static pipe 18 to rotatable pipe 12 with minimal loss of pressure and, failures aside, without leakage. In the context of the present invention high pressure coolant refers to coolant delivered at a pressure in the range from about 40 Bar to about 70 Bar but may be up to 500 Bar, and at a flow rate of up to 60 litre per minute or greater.

The coolant nozzle 8 is adapted and arranged to direct the jet of high pressure coolant, issuing from it in use, substantially in the direction of the flutes towards the cutting zone of the rotary cutting tool 2. The high pressure coolant jet assists chip evacuation and is preferably delivered at a pressure of at least 5 Bar and, as mentioned, at up to a pressure within the range from about 40 Bar to about 70 Bar. Preferably the milling cutter is of the kind described in our co-pending patent application referenced above, and has a multiplicity of small helical flutes or cutting edges at about 20 or 25 in number and possibly up to about 100 or even more.

The invention may be applied to all geometries of milling cutter and to shallow drilling. The effect of the relatively fixed high pressure jet of coolant directed into the cutting zone of the rotary cutting tool gives very effective swarf removal so that the milling or drilling tool may be provided with smaller flutes and hence stronger cutting teeth. Tool wear is also reduced and, in turn, tool rotational speed may be increased and overall material removal rates may be substantially higher than hitherto achieved. The method may be carried into practice using a multi-axis, numerically controlled machining centre. Such machines usually have a horizontal spindle and a high flow rate, but low pressure, coolant delivery system which fairly well floods the region of the workpiece being machined. In carrying out the present invention it is envisioned that the high pressure coolnat delivery nozzles will be used close to the rotary cutting tool in conjunction with the usual low pressure coolant system which carries away machining debris.

## Claims

1. A method of high speed milling using a rotary cutting tool including the step of directing towards the cutting zone of the rotary cutting tool a jet of high pressure coolant delivered at a pressure of at least 5 Bar and up to about 500 Bar.

2. A method as claimed in claim 1 wherein the jet of high pressure coolant is delivered at a pressure within the range of about 40 Bar up to about 70 Bar.

3. A method as claimed in either claim 1 or claim 2 wherein the jet of high pressure coolant is delivered at a flow rate of up to 60 litres per minute or greater.

4. A method as claimed in anyreceding claim wherein the rotary cutting tool comprises a multi-flute milling cutter having at least 20 cutting edges.

5. A method as claimed in claim 4 wherein the rotary cutting tool has up to about 100 cutting edges.

6. A method of high speed milling substantially as hereinbefore described.

7. Apparatus for carrying out the method of high speed milling as claimed in any preceding claim comprising a spindle for mounting a rotary cutting tool, at least one nozzle for directing towards the cutting zone of the rotary cutting tool a jet of high pressure coolant, a source of high pressure coolant connected with said nozzle to deliver a jet of high pressure coolant of at least 5 Bar and up to about 500 Bar.

8. Apparatus as claimed in claim 7 wherein the rotary cutting tool has up to about 100 cutting edges.

9. Apparatus as claimed in claim 7 or claim 8 comprising a horizontal spindle, multi-axis machining centre.

10. Apparatus as claimed in any one of claims 7, 8 or 9 further comprising nozzle mounting means arranged for movement concentric with the spindle axis of the machining centre.

11. Apparatus as claimed in claim 10 wherein the nozzle mounting means is arranged to swing clear of the machine spindle for a tool changing operation.

12. Apparatus substantially as hereinbefore described for carrying out a method of high speed milling in accordance with any one of claims 1 to 6.
